# EUROPÄISCHE PATENTSCHRIFT

(11) **EP 2 860 004 B1**
(45) Veröffentlichungstag und Bekanntmachung des Hinweises auf die Patenterteilung: **14.06.2017**
(21) Anmeldenummer: 14188400.7
(22) Anmeldetag: 10.10.2014
(51) Int. Cl.: B29B 9/06, G10K 11/172, B23D 47/00, B26D 7/22, B26D 1/38

(54) **Stranggranulator mit Helmholtzresonator, sowie Verfahren zum Granulieren von Kunststoffsträngen unter Verwendung eines solchen**
Strand granulator with Helmholtz resonator, and use of the same in a method for granulating polymer strands
Granulateur de joncs équipé d'un résonateur Helmholtz, et son utilisation dans un procédé de granulation des fils de base en plastique

(30) Priorität: 14.10.2013 DE 102013220725
(43) Veröffentlichungstag der Anmeldung: 15.04.2015
(73) Patentinhaber: Maag Automatik GmbH, 63762 Großostheim (DE)
(72) Erfinder: Zollitsch, Ludwig, 70825 Korntal (DE); Kreuz, Ulrich, 71729 Erdmannshausen (DE); Troge, Jan, 01824 Gohrisch (DE); Linke, Moritz, 01809 Dohna (DE)
(74) Vertreter: Klunker . Schmitt-Nilson . Hirsch

(56) Entgegenhaltungen:
- WO-A2-2007/073732
- DE-A1- 4 413 085
- DE-A1-102007 016 347
- DE-U1-202011 004 521
- GB-A- 885 266
- US-A- 4 137 806
- US-A1- 2004 164 443
- US-A1- 2008 135 327

## Beschreibung

Die vorliegende Erfindung betrifft einen Stranggranulator zum Granulieren eines oder mehrerer Kunststoffstränge sowie ein Verfahren zum Granulieren eines oder mehrerer Kunststoffstränge mittels eines derartigen Stranggranulators.

Es ist bekannt, Kunststoffstränge mittels einer Messerwalze und einem damit zusammenwirkenden Ambossmesser eines Stranggranulators zu Granulat zu pelletieren. Dabei werden die Kunststoffstränge der Messerwalze in Endlosform zugeführt. In diesem Zusammenhang soll mit dem Begriff "Endlosform" ausgedrückt werden, dass die Kunststoffstränge beliebig lang sein können. Normalerweise werden derartige Kunststoffstränge extrudiert, gekühlt und, nachdem sie hinrei - chend steif sind, um pelletiert zu werden, der Messerwalze (und dem damit zu - sammenwirkenden Ambossmesser) zugeführt.

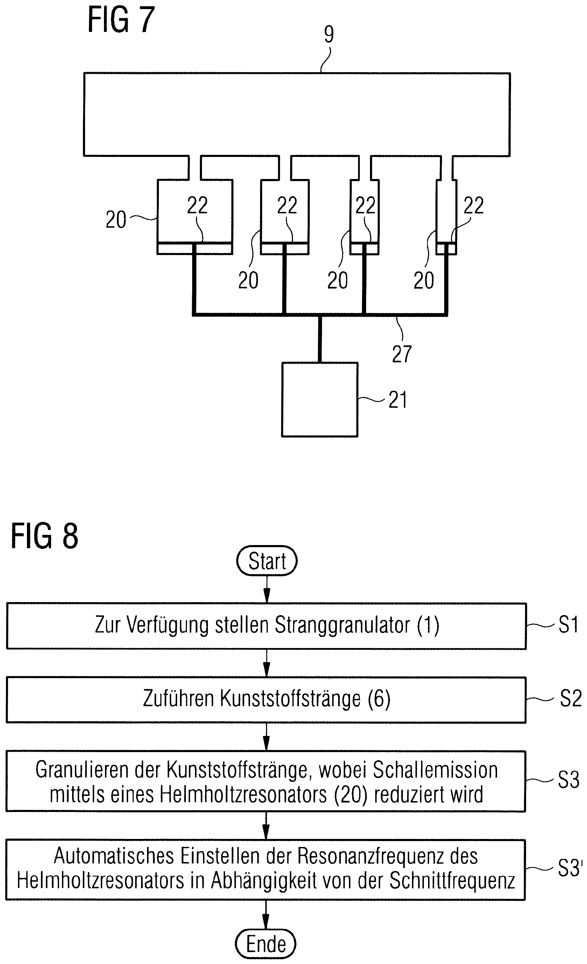

Derartige Granulatoren sind sehr laut. Es ist bekannt, dass die Lärmemission redu - ziert werden kann, indem, wie in Figur 7 dargestellt, die Granuliermesser 1003 der Messerwalze 1002 des Stranggranulators 1001 entlang ihrer Längsachse schräg zu einer zu der Rotationsrichtung der Messerwalze senkrechten Richtung ausgerichtet werden, so dass sich die Granuliermesser entlang ihrer Längsachse etwas in die Rotationsrichtung erstrecken. Jedoch hat es sich herausgestellt, dass die Granuliermesser nur um einen Winkel von höchstens ca. vier Grad gegenüber der zur Rota - tionsrichtung senkrechten Richtung in die Rotationsrichtung gedreht angeordnet werden sollten, da andernfalls die zu pelletierenden Kunststoffstränge vom Granu - liermesser zu stark zur Seite gedrückt werden und dadurch die Granulatqualität vermindert wird. Dementsprechend kann durch die schräge Anordnung der Gra - nuliermesser nur eine relativ geringe Reduzierung der Schallemission des Strang - granulators erreicht werden.

In der DE 10 2007 016347 A1 wird ein Verfahren und eine Vorrichtung zur Herstel lung von Kunststoffgranulat beschrieben, mit einem Granulator, der einen im We sentlichen kontinuierlich geförderten Kunststoffmassestrom in Granulatteilchen zerteilt. Der Granulator umfasst eine Schneideinrichtung, deren Schneidorgane beim Zerteilen des Kunststoffs am Kunststoffmassestrom zum Eingriff kommen.

Gemäß der US 4,137,806 A wird Lärm, welcher von einem Drehschneidwerkzeug, insbesondere einer Kreissäge, während des Leerlaufbetriebs erzeugt wird, mittels einer Schallschutzhaube gedämpft. Eine Innenwand der Schallschutzhaube kann verschiedene Schallabsorptionseinrichtungen umfassen, wie beispielsweise Helm holtzresonatoren oder schalldämmende geschäumte Materialien.

In der DE 20 2011 004521 U1 ist ein Ansaugkrümmer zum Ansaugen von Verbrennungsluft für einen Verdichter einer Gasturbine offenbart, der zur Abgrenzung ge gen die Umgebung eine Mehrzahl von Wänden aufweist. Zur Verringerung des im Betrieb der Gasturbine im Lufteinlassbereich entstehenden bzw. abgegebenen Lärms am Ansaugkrümmer wird wenigstens ein mit dem Innenraum des Ansaugkrümmers in Verbindung stehender Helmholtz-Resonator angeordnet, dessen Re sonanzverhalten steuerbar verändert werden kann. Der wenigstens eine Helm holtz-Resonator ist an eine Steuerung angeschlossen, welche das Resonanzverhalten des wenigstens einen Helmholtz-Resonators nach Massgabe des Betriebs zustands der Gasturbine steuert

Der Erfindung liegt die Aufgabe zu Grunde, die Schallemission eines Stranggranulators wirksamer zu reduzieren. Diese Aufgabe wird durch einen Stranggranulator und ein Granulierverfahren gemäß den unabhängigen Ansprüchen gelöst. In davon abhängigen Ansprüchen sind vorteilhafte Ausgestaltungen und Weiterbildungen der Erfindung angegeben.

Ein erfindungsgemäßer Stranggranulator zum Granulieren eines oder mehrerer Kunststoffstränge zu Granulat mittels einer Messerwalze, welche derart angeordnet ist, dass ihr Kunststoffstränge in Endlosform zuführbar sind, und einem mit der Messerwalze zusammenwirkenden Ambossmesser, umfasst zumindest eine Resonanz-Schallabsorptionseinrichtung, die angeordnet und eingerichtet ist, im Betrieb des Stranggranulators eine Schallemission des Stranggranulators zu reduzieren.

Bei einem entsprechenden Granulierverfahren wird dementsprechend zunächst ein erfindungsgemäßer Stranggranulator zur Verfügung gestellt. Anschließend werden der Messerwalze ein oder mehrere Kunststoffstränge in Endlosform zugeführt und damit zu Granulat pelletiert, wobei die Schallemission des Stranggranulators mittels der Resonanz-Schallabsorptionseinrichtung des Stranggranulators reduziert wird.

Als Resonanz-Schallabsorptionseinrichtung wird im Zusammenhang mit der vorliegenden Anmeldung ein Schallabsorber bezeichnet, bei dem eine Masse von dem zu absorbierenden Schall zu einer freien gedämpften Schwingung angeregt wird. Derartige Schallabsorber werden oft auch als akustisches Feder-Masse-System bezeichnet. Dementsprechend absorbiert ein derartiger Schallabsorber den Schall besonders stark bei der Resonanzfrequenz der freien gedämpften Schwingung der Masse. Diese Resonanzfrequenz ist vorzugsweise einstellbar.

Vorzugsweise wird die zuvor genannte Masse, die zur freien gedämpften Schwingung angeregt wird, durch ein Gas (z.B. Luft) gebildet (Gasmasse) und die Resonanz-Schallabsorptionseinrichtung umfasst dann dementsprechend diese Gasmasse (z.B. Luftmasse) und ein daran angrenzendes Gasvolumen (z.B. Luftvolumen) oder besteht aus der Gasmasse und dem Gasvolumen. Die Gasmasse wird durch den Schall bewegt und zu einer freien gedämpften Schwingung angeregt. Das daran anschließende Gasvolumen ist derart eingeschlossen, dass es als Feder für die freie gedämpfte Schwingung der zuvor genannte Gasmasse dient.

Ein Helmholtzresonator stellt eine besonders wirksame derartige Resonanz-Schallabsorptionseinrichtung dar. Ein Helmholtzresonator ist vergleichbar mit einem Einmassenschwinger oder einem elektrischen Schwingkreis. Bei einem Helmholtzresonator schwingt eine in einem Resonatorhals des Helmholtzresonators befindliche Gasmasse oder Luftmasse gegen ein in einem Resonatorbehältnis (auch Resonatorbauch genannt) des Helmholtzresonators befindliches Gasvolumen oder Luftvolumen. Daraus ergibt sich ein akustisches Resonanzsystem, das ähnlich einem Einmassenschwinger eine Resonanzfrequenz aufweist. Wird diese Frequenz durch ein angekoppeltes Schallfeld angeregt, gerät die bewegte Luftmasse und das federnde Luftvolumen in Resonanz. Dadurch wird dem Schallfeld bei dieser Frequenz Energie entzogen, und es stellt sich eine schmalbandige, dämpfende Wirkung ein.

Es gibt jedoch auch noch andere Resonanz-Schallabsorptionseinrichtungen, beispielsweise Platten-Schallabsorber, bei denen eine mittels einer entsprechenden Aufhängung geeignet (d.h. federnd und gedämpft) gelagerte Platte mit einer geschlossenen Oberfläche durch den zu absorbierenden Schall zu einer freien gedämpften Schwingung angeregt wird.

Eine besonders wirksame Reduzierung der Schallemission wird erreicht, wenn die Resonanz-Schallabsorptionseinrichtung oder zumindest eine der Resonanz-Schallabsorptionseinrichtungen eine Resonanzfrequenz besitzt, die gleich oder nahe der Frequenz ist, bei der der Stranggranulator - ohne die Resonanz-Schallabsorptionseinrichtung - Schall mit einer im Vergleich zu anderen Frequenzen größten Intensität erzeugen würde. Um die Resonanzfrequenz der zumindest einen Resonanz-Schallabsorptionseinrichtung auf diese - i.Allg. vom Betriebszustand des Granulators abhängige - Frequenz abzustimmen, wird gemäß der Erfindung eine Resonanz-Schallabsorptionseinrichtung mit einer veränderbaren Resonanzfrequenz verwendet, z.B. ein Helmholtzresonator mit veränderbarem Resonatorvolumen.

Häufig wird bei der Schnittfrequenz und deren ganzzahligen Vielfachen (Harmonische, Oberwellen) des Granulators, d.h. bei der Frequenz fₛ, mit der die Granuliermesser der Messerwalze auf den Strang oder einen der Stränge treffen, Lärm mit im Vergleich zu anderen Frequenzen besonders großer Intensität erzeugt. Diese Schnittfrequenz fₛ berechnet sich zu: fₛ=nₜ/t, wobei nₜ die Anzahl der Granuliermesser ist, die während eines (zur Mittelung hinreichend langen) Zeitraums t auf den Strang oder einen der Stränge treffen. Die Schnittfrequenz ist gleich der Drehzahl der Messerwalze (Umdrehungen pro Zeiteinheit) multipliziert mit der Anzahl der Zähne der Messerwalze, die auf den oder die Stränge während einer Umdrehung treffen.

Dementsprechend wird bevorzugt zumindest eine Resonanz-Schallabsorptionseinrichtung verwendet, deren Resonanzfrequenz auf mehrere Schnittfrequenzen, mit denen der Granulator arbeiten kann, vorzugsweise auf alle Schnittfrequenzen, mit denen der Granulator arbeiten kann, abgestimmt werden kann. "Abgestimmt werden" bedeutet in diesem Zusammenhang, dass die Resonanzfrequenz so geändert werden kann, dass sie im Wesentlichen (bis auf apparative Ungenauigkeiten) gleich einer beliebigen dieser zuvor genannten Schnittfrequenzen ist.

Besonders bevorzugt umfasst der Stranggranulator eine automatische Stelleinrichtung, die eingerichtet ist, die Resonanzfrequenz der Resonanz-Schallabsorptionseinrichtung in Abhängigkeit von der Schnittfrequenz des Granulators automatisch einzustellen, besonders bevorzugt automatisch auf die Schnittfrequenz abzustimmen, damit auch nach Änderung der Schnittfrequenz ohne Nutzereingriff eine hohe Schallreduktion erzielt werden kann.

Das erfindungsgemäße Granulierverfahren umfasst dementsprechend vorzugsweise den weiteren Schritt des Veränderns der Resonanzfrequenz der Resonanz-Schallabsorptionseinrichtung, besonders bevorzugt des - ggf. automatischen - Einstellens der Resonanzfrequenz der Resonanz-Schallabsorptionseinrichtung in Abhängigkeit von der Schnittfrequenz des Granulators oder des - ggf. automatischen - Abstimmens der Resonanzfrequenz der Resonanz-Schallabsorptionseinrichtung auf die Schnittfrequenz des Granulators.

Die zuvor genannte Stelleinrichtung kann z.B. eine Erfassungseinrichtung zum Erfassen der Schnittfrequenz oder einer dazu proportionalen Frequenz sowie zumindest einen anhand der erfassten Schnittfrequenz oder der dazu proportionalen Größe gesteuerten Aktuator (z.B. einen elektronisch gesteuerten Aktuator) zum Einstellen der Resonanzfrequenz umfassen. Dabei kann ein einzelner Aktuator eine oder auch mehrere oder alle der Resonanz-Schallabsorptionseinrichtungen ansteuern. Mittels eines solchen Aktuators kann beispielsweise ein Volumen eines Helmholtzresonators eingestellt werden. Die Schnittfrequenz kann z.B. via einer Schallmessung oder einer Vibrationsmessung erfasst werden oder auch besonders einfach aus einer erfassten Drehzahl der Messerwalze abgeleitet werden (durch Multiplikation mit der Anzahl der über den Umfang der Messerwalze verteilten Messer). Der Verfahrensschritt des automatischen Einstellens (oder Abstimmens) der Resonanzfrequenz der Resonanz-Schallabsorptionseinrichtung umfasst demnach vorzugsweise die Teilschritte des Erfassens der Schnittfrequenz oder einer dazu proportionalen Frequenz sowie des Ansteuerns des Aktuators zum Einstellen der Resonanzfrequenz.

Durch das Pelletieren der Kunststoffstränge zu Granulat mittels der Messerwalze und dem damit zusammenwirkenden Ambossmesser kommt es stets zu einem Granulatflug, d.h. das erzeugte Granulat wird in eine oder mehrere Richtungen geschleudert. Um bei Verwendung eines Helmholtzresonators als Resonanz-Schallabsorptionseinrichtung zu verhindern, dass Granulat in den zumindest einen Helmholtzresonator gelangt und dadurch dessen Funktionsfähigkeit beeinträchtigt, wird vorzugsweise die Öffnung des Helmholtzresonators oder - wenn der Helmholtzresonator mehrere Öffnungen aufweist - zumindest eine oder vorzugsweise alle Öffnungen des Helmholtzresonators mit einer Abdeckung versehen, die dessen Funktionsfähigkeit als Resonanz-Schallabsorptionseinrichtung nicht beeinträchtigt. Damit die Abdeckung die Funktionsfähigkeit des Helmholtzresonators nicht beeinträchtigt, ist diese vorzugsweise luftdurchlässig. Alternativ dazu kann die Abdeckung auch als beweglich gelagerte und/oder flexible Membran ausgestaltet sein, durch die sich die Schallwellen hindurch ausbreiten.

Weiterhin wird der Helmholtzresonator vorzugsweise derart angeordnet, dass dessen Öffnung oder zumindest eine oder alle seiner Öffnungen außerhalb des Granulatflugbereichs liegt bzw. liegen, d.h. die Öffnungen sind vorzugsweise derart angeordnet, dass - bei allen mit dem Granulator möglichen Schnittfrequenzen und ggf. sonstigen änderbaren Betriebszuständen - keine oder zumindest nahezu keine Granulatteilchen durch das Granulieren in die Öffnungen oder auf die abgedeckten Öffnungen geschleudert werden können.

Auch bei anderen Resonanz-Schallabsorptionseinrichtungen ist das zuvor beschriebene Abdecken eines Schallabsorptionsabschnitts der Resonanz-Schallabsorptionseinrichtung mit der zuvor beschriebenen Abdeckung und das Anordnen des Schallabsorptionsabschnitts der Resonanz-Schallabsorptionseinrichtung außerhalb eines Granulatflugbereichs vorteilhaft, um zu verhindern, dass die Resonanz-Schallabsorptionseinrichtung durch den Granulatflug beeinträchtigt wird. Als Schallabsorptionsabschnitt wird dabei der Abschnitt der Resonanz-Schallabsorptionseinrichtung bezeichnet, in den der Schall, der dann absorbiert wird, eintritt oder auf den der der Schall, der dann absorbiert wird, auftrifft. Dementsprechend stellt eine Öffnung eines Helmholtzresonantors einen derartigen Schallabsorptionsabschnitt dar. Dasselbe gilt für die federnd und gedämpft gelagerte Platte des eingangs beschriebenen Platten-Schallabsorbers.

Bei einer bevorzugten Ausführungsform, bei der der Stranggranulator eine die Messerwalze und das Ambossmesser im Wesentlichen umschließende Granulierkammer umfasst, kann eine besonders starke Reduzierung der Schallemission erreicht werden, indem ein Schallabsorptionsabschnitt der Resonanz-Schallabsorptionseinrichtung in dieser Granulierkammer angeordnet wird. Mit dem Begriff "im Wesentlichen umschließen", wird eine Granulierkammer beschrieben, die eine oder mehrere Öffnungen zum Zuführen der Kunststoffstränge und zum Abführen des Granulats aufweist, jedoch darüber hinaus die Messerwalze und das Ambossmesser derart umschließt, dass Schallemissionen durch die Granulierkammer signifikant reduziert werden.

Ebenfalls bevorzugt weist der Stranggranulator einen Granulataustrittskanal auf, durch den das Granulat abgeführt wird. Es hat sich herausgestellt, dass die Schallemission besonders gut reduziert werden kann, wenn der Schallabsorptionsabschnitt der Resonanz-Schallabsorptionseinrichtung in diesem Granulataustrittskanal angeordnet ist.

Wie eingangs erwähnt, umfasst der Stanggranulator zum besonders wirksamen Dämpfen der Schallemission besonders bevorzugt mehrere der zuvor beschriebenen Resonanz-Schallabsorptionseinrichtungen, die angeordnet und eingerichtet sind, Schallemissionen des Stranggranulators zu reduzieren. Von diesen mehreren Resonanz-Schallabsorptionseinrichtungen besitzt bevorzugt zumindest eine einen in der Granulierkammer angeordneten Schallabsorptionsabschnitt und zumindest eine weitere einen in dem Graulataustrittskanal angeordneten Schallabsorptionsabschnitt. Weiterhin kann insbesondere zumindest noch eine weitere der Resonanz-Schallabsorptionseinrichtungen einen in einem zur Granulierkammer führenden Strangeingang - der zum Zuführen der Kunststoffstränge dient - angeordneten Schallabsorptionsabschnitt besitzen.

Der zuvor beschriebene in der Granulierkammer angeordnete Schallabsorptionsabschnitt der oder einer der Resonanz-Schallabsorptionseinrichtung(en) kann beispielsweise unterhalb einer Einzugswalze angeordnet werden, um die Schallemission besonders gut zu reduzieren. Eine derartige Anordnung ist besonders vorteilhaft bei Verwendung eines Helmholtzresonators, da die den Schallabsorptionsabschnitt ausmachende Öffnung des Helmholtzresonators dadurch außerhalb des Granulatflugbereichs angeordnet werden kann.

Aus denselben Gründen wird der zuvor beschriebene in dem Granulataustrittskanal angeordnete Schallabsorptionsabschnitt der oder einer der Resonanz-Schallabsorptionseinrichtung(en) bevorzugt in einem bezogen auf die Länge des Granulataustrittskanals (in Richtung zu einer Austrittsöffnung des Kanals gesehen) ersten Drittel angeordnet. Dies gilt insbesondere bei Verwendung eines Helmholtzresonators, da die den Schallabsorptionsabschnitt ausmachende Öffnung des Helmholtzresonators dadurch außerhalb des Granulatflugbereichs angeordnet werden kann.

Wie bereits erwähnt, ist der Stranggranulator vorzugsweise derart ausgelegt, dass die Resonanzfrequenz der oder einer der Resonanz-Schallabsorptionseinrichtung(en) auf die Schnittfrequenz des Stranggranulators abgestimmt wird. Bei Verwendung mehrerer Resonanz-Schallabsorptionseinrichtungen, z.B. mehrerer Helmholtzresonatoren, kann es jedoch zur optimalen Schallreduzierung hilfreich sein, die Resonanzfrequenz zumindest einer dieser Resonanz-Schallabsorptionseinrichtungen auf die Schnittfrequenz des Granulators abzustimmen und die Resonanzfrequenz zumindest einer weiteren der Resonanz-Schallabsorptionseinrichtungen auf eine zu der Schnittfrequenz harmonische Frequenz (i.Allg. ein Vielfaches der Schnittfrequenz) abzustimmen, da bei einer derartigen harmonischen Frequenz auch viel Schall durch das Granulieren erzeugt wird.

Dementsprechend weist der Stranggranulator gemäß einer besonders bevorzugten Ausführungsform mehrere Resonanz-Schallabsorptionseinrichtungen auf, welche angeordnet und eingerichtet sind, Schallemissionen zu reduzieren, wobei die Resonanzfrequenz zumindest eines dieser Resonanz-Schallabsorptionseinrichtungen auf mehrere Schnittfrequenzen, mit denen der Granulator betrieben werden kann, abgestimmt werden kann und die Resonanzfrequenz zumindest einer weiteren dieser Resonanz-Schallabsorptionseinrichtungen auf zu diesen Schnittfrequenzen harmonische Frequenzen abgestimmt werden kann.

Dabei ist bevorzugt die Resonanzfrequenz aller dieser Resonanz-Schallabsorptionseinrichtungen, wie oben beschrieben, in Abhängigkeit von der Schnittfrequenz automatisch einstellbar, besonders bevorzugt durch Verwendung einer Erfassungseinrichtung zum Erfassen der Schnittfrequenz oder einer dazu proportionalen Größe sowie zumindest eines an Hand der erfassten Schnittfrequenz oder der dazu proportionalen Größe gesteuerten Aktuators zum Einstellen der Resonanzfrequenz. Dabei kann ein einzelner Aktuator zum Einstellen der Resonanzfrequenz einer oder mehrerer der oder aller Resonanz-Schallabsorptionseinrichtungen dienen. Insbesondere kann ein gemeinsamer Aktuator für die zuvor genannte zumindest eine der Resonanz-Schallabsorptionseinrichtungen, die auf mehrere Schnittfrequenzen, mit denen der Granulator betrieben werden kann, abgestimmt werden kann, und die zumindest eine weitere der Resonanz-Schallabsorptionseinrichtungen, die auf zu diesen Schnittfrequenzen harmonische Frequenzen abgestimmt werden kann, vorgesehen sein.

Beispielsweise können zumindest eine erste auf die Schnittfrequenz abgestimmte oder abstimmbare Resonanz-Schallabsorptionseinrichtung und zumindest eine zweite auf eine zu der Schnittfrequenz harmonische Frequenz abgestimmte oder abstimmbare Resonanz-Schallabsorptionseinrichtung und ggf. zumindest eine weitere auf eine oder mehrere weitere zu der Schnittfrequenz harmonische Frequenzen abgestimmte oder abstimmbare Resonanz-Schallabsorptionseinrichtung in der Granulierkammer, z.B. unterhalb der Messerwalze, angeordnet werden. Alternativ oder zusätzlich können derartige erste, zweite und ggf. weitere Resonanz-Schallabsorptionseinrichtungen auch in dem Granulataustrittskanal, z.B. in dem ersten Drittel davon, und ggf. zusätzlich auch in dem Strangeingang angeordnet werden.

Weitere Merkmale und Vorteile der Erfindung ergeben sich aus der folgenden Beschreibung der erfindungsgemäßen Ausführungsbeispiele sowie weiterer Ausführungsalternativen im Zusammenhang mit den Zeichnungen, die schematisch zeigen:
- Figur 1a:: das Grundprinzip eines Helmholtzresonators,
- Figur 1b:: als mechanisches Äquivalent zu dem Helmholtzresonator von Figur 1 A eine an einer Feder und einem Dämpfungselement aufgehängte Masse,
- Figur 1c:: ein Resonanzspektrum des Helmholtzresonators von Figur 1A,
- Figur 1d:: eine Formel zur Berechnung der Resonanzfrequenz des Helmholtzresonators von Figur 1 A,
- Figur 2:: ein Schallemissionsspektrum eines Granulators gemäß dem Stand der Technik,
- Figur 3a:: einen erfindungsgemäßen Stranggranulator gemäß einer ersten Ausführungsform,
- Figur 3b:: einen bei dem Stranggranulator von Figur 3A verwendeten Helmholtzresonator mit verstellbarer Resonanzfrequenz,
- Figur 4:: einen erfindungsgemäßen Stranggranulator gemäß einer zweiten Ausführungsform,
- Figuren 5 und 6:: bevorzugte Positionen zur Anordnung von Helmholtzresonatoren bei einem erfindungsgemäßen Stranggranulator,
- Figur 7:: mehrere Helmholtzresonatoren mit gemeinsamen Aktuator zum ändern der Resonanzfrequenzen,
- Figur 8:: die Schritte eines erfindungsgemäßen Granulierverfahrens, und
- Figur 9:: einen Stranggranulator gemäß dem Stand der Technik mit leicht gegenüber der Rotorachse geneigten Granuliermessern.

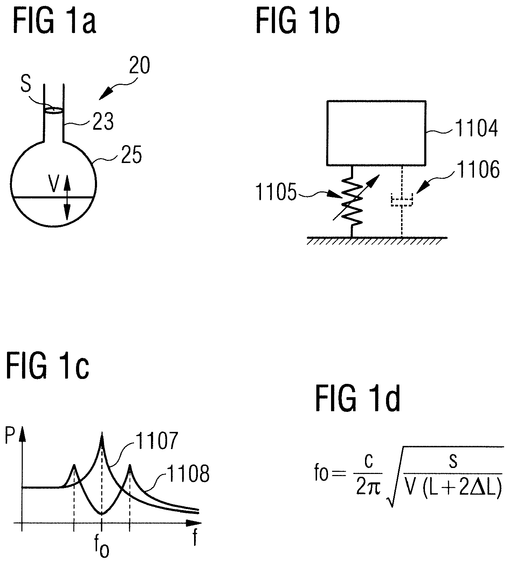

Figur 1 zeigt einen Helmholtzresonator 20. Dabei handelt es sich um einen mit Gas (normalerweise Luft) gefüllten Behälter 25 mit einem offenen Hals 23, der auch durch ein Loch gebildet werden kann. Einfallende Schallwellen regen die im Resonatorhals befindliche Luftmasse zum Schwingen an. Diese schwingt gegen das sich anschließende Luftvolumen des Resonators, das - vorliegend in einem kugelförmigen Behältnis - derart eingeschlossen ist, dass es als nachgiebige Feder wirkt. Besonders effektiv absorbiert ein Helmholtz-Resonator den Schall, wenn die Schwingung der Luftmasse durch erhöhte Luftreibung im Resonatorhals 23 gedämpft wird.

Dementsprechend wird durch einen derartigen Helmholtzresonator eine Art Feder-Masse-System gebildet, wie es in Figur 1 b dargestellt ist. Dabei handelt es sich um eine Masse 1104, die an einer Feder 1105 mit vorzugsweise (z.B. durch Variation des Behältervolumens des Helmholtzresonators) einstellbarer Federkonstante schwingbar gelagert ist, wobei eine entsprechende Schwingung durch ein Dämpfungselement 1106 gedämpft wird, so dass die Masse 1104 zu einer freien gedämpften Schwingung anregbar ist.

In Figur 1c ist schematisch das Schalldämpfungsverhalten eines derartigen Helmholtzresonators 20 dargestellt, wobei die Intensität P über der Frequenz f aufgetragen ist. Dabei stellt die Kurve 1107 ein eintreffendes Frequenzspektrum (ohne Helmholtzresonator) dar, das bei der Resonanzfrequenz des Helmholtzresonators 20 eine hohe Intensität aufweist. Die Kurve 1108 zeigt das durch den Helmholtzresonator gedämpfte Frequenzspektrum. Die lintensität ist dementsprechend bei der Resonanzfrequenz f₀ des Helmholtzresonators wesentlich reduziert, wobei allerdings bei dazu benachbarten Frequenzen die Intensität durch den Helmholtzresonator etwas erhöht wird.

In Figur 1 d ist eine Formel zu Berechnung der Resonanzfrequenz eines Helmholtzresonators dargestellt. Dabei ist f₀ die Resonanzfrequenz des Helmholtzresonators, c die Schallgeschwindigkeit, S die Querschnittsfläche des Resonatorhalses, V das Volumen des in dem Behältnis des Helmholtzresonators 20 enthaltenen Gases, L die Länge des Resonatorhalses und ΔL ein Korrekturterm, mit dem spezifische Halsformen berücksichtigt werden können (für einen kurzen runden Hals mit dem Radius R gilt ΔL ≈ π/4R). Die akustisch wirksame Länge des Halses (z.B. Rohres) ist dementsprechend meistens länger als die reale Länge. Durch die Mündungsöffnung wird ein Impedanzsprung hervorgerufen, der üblicherweise nicht genau am Ende des Rohres sein Maximum hat. Dieses Phänomen kann durch die Mündungskorrektur berücksichtigt werden. Aus der Formel von Figur 1 d ist insbesondere ersichtlich, dass sich die Resonanzfrequenz des Resonators durch Variation des Volumens V, der Halslänge L und/oder der Halsfläche S einstellen lässt.

Insgesamt kann dementsprechend mit einem Helmholtzresonator Schall bei der Resonanzfrequenz f₀ des Helmholtzresonators besonders stark reduziert werden (schmalbandige Wirkung), wobei diese Resonanzfrequenz z.B. durch Variation des Volumens des Helmholtzresonators, einstellbar ist. Neben Helmholtzresonatoren gibt es, wie eingangs erwähnt, noch weitere Resonanz-Schallabsorptionseinrichtungen. Diese besitzen allesamt eine Masse, die durch den Schall, wie in Figur 1 b dargestellt, zu einer freien gedämpften Schwingung angeregt werden kann (Feder-Masse-System, wie in Figur 1 b dargestellt). Die Resonanz-Schallabsorptionseinrichtungen besitzen folglich alle eine Resonanzfrequenz und dämpfen den Schall bei dieser Resonanzfrequenz besonders stark.

Ein Helmholtzresonator kann alternativ zu der bevorzugten Ausführung mit einer Öffnung auch mehrere Öffnungen besitzen. Das Volumen V des Helmholtzresonators ist vorzugsweise wie in Figur 1 dargestellt exakt begrenzt. Es ist jedoch auch die Möglichkeit bekannt, einen Helmholtresonator mit einem unscharf begrenzten Resonatorvolumen zu bilden.

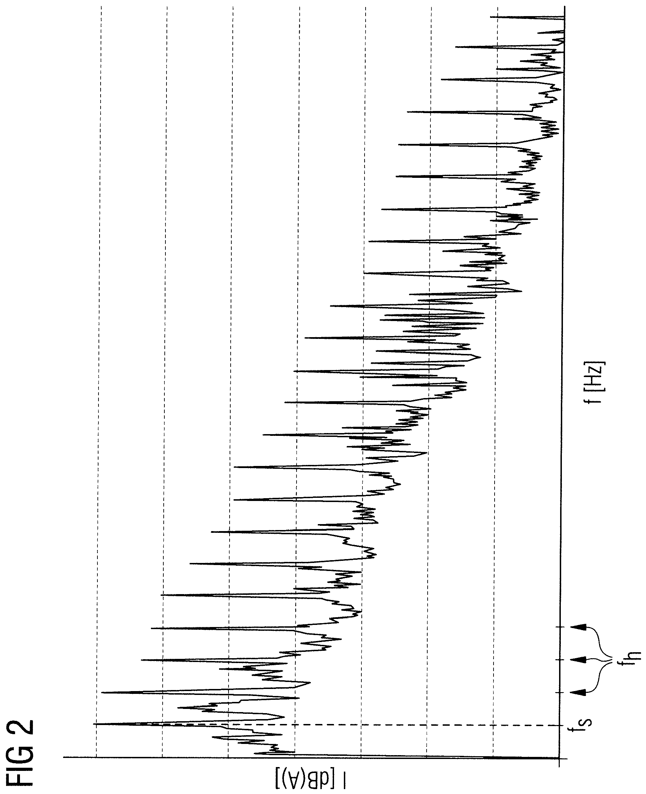

In Figur 2 ist ein Schallemissionsspektrum eines Stranggranulators dargestellt, wobei die Intensität I [dB(A)] über der Frequenz f [Hz] aufgetragen ist. Wie aus Figur 2 ersichtlich, weist das Frequenzspektrum insbesondere bei der Schnittfrequenz fₛ des Granulators einen Peak mit besonders hoher Intensität auf. Zudem weist das Frequenzspektrum weitere Peaks bei zu der Schnittfrequenz fₛ harmonischen Frequenzen fₕ auf, von denen in Figur 2 nur einige exemplarisch mit der Variable fₕ markiert sind. Üblicherweise und vorliegend handelt es sich bei diesen harmonischen Frequenzen um Vielfache der Schnittfrequenz fₛ.

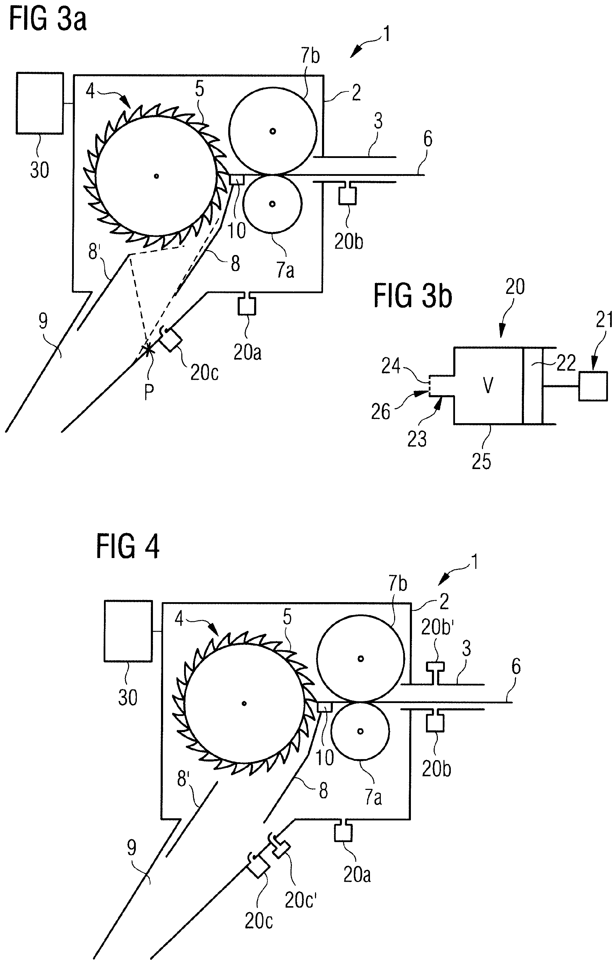

Figur 3 zeigt einen Stranggranulator 1 gemäß einer ersten Ausführungsform der Erfindung. Dieser umfasst unter anderem eine Granulierkammer 2, einen Strangeingang 3 zum Zuführen der zu granulierenden Kunststoffstränge 6, Einzugswalzen 7a, 7b zum Einziehen der Stränge 6, eine Messerwalze 4 mit Granuliermessern 5 und ein damit zusammenwirkendes Ambossmesser 10 zum Granulieren der Stränge 6 und einen Granulataustrittskanal 9. Um die besonders hohe Schallintensität bei der Schnittfrequenz fₛ zu dämpfen, ist der Stranggranulator 1 mit mehreren Resonanz-Schallabsorptionseinrichtungen 20a, 20b und 20c ausgestattet, die vorliegend als Helmholtzresonatoren 20 ausgestaltet sind.

Diese bereits im Zusammenhang mit Figur 1a erläuterten Helmholtzresonatoren 20 besitzen jeweils, wie in Figur 3b dargestellt, ein mittels eines Aktuators 21 und eines Kolbens 22 variierbares Volumen V. Überdies weist der Granulator 1 eine Schnittfrequenzerfassungseinrichtung 20 auf, die anhand der Drehfrequenz der mit den Schneidmessern 5 versehenen Messerwalze 4 die Schnittfrequenz fₛ, mit der die Messer 5 auf die Stränge 6 treffen, bestimmt. Anhand dieser Schnittfrequenz fₛ wird mittels des Aktuators 21 und des Kolbens 22 das Resonanzvolumen V der Resonatoren 20 derart angepasst, dass deren Resonanzfrequenz fₒ stets - abgesehen von apparativen Ungenauigkeiten - gleich der Schnittfrequenz fₛ ist, um diese - wie aus Figur 2 hervorgeht - besonders intensive Schallfrequenz möglichst stark zu dämpfen.

Es hat sich herausgestellt, dass dadurch ein besonders wirksamer Lärmschutz erzielt wird, insbesondere weil bei der Schnittfrequenz fₛ nicht nur durch das Zerteilen der Stränge 6 mittels der Messer besonders viel Lärm erzeugt wird. Vielmehr erzeugt auch die Bewegung der Messer am Ambossmesser vorbei Schall, der bei der Schnittfrequenz fₛ besonders lautstark ist, selbst wenn keine Stränge 6 granuliert werden und sich lediglich die Messerwalze 4 dreht.

Wie aus Figur 3A ersichtlich ist, ist eine der als Helmholtzresonator 20 ausgestalteten Resonanz-Schallabsorptionseinrichtungen 20a derart angeordnet, dass sich die Öffnung 25 des Resonatorhalses 23 unterhalb der Einzugswalzen 7a und 7b befindet. In diesem Bereich unterhalb der Einzugswalzen 7a, 7b kann der Helmholtzresonator den erzeugten Lärm sehr wirksam reduzieren. Weiterhin wird die unterhalb der Einzugswalzen 7a, 7b angeordnete Resonatoröffnung 25 nicht von umherfliegenden Granulatteilchen getroffen, weil sie durch ein Abweiselement 8, das die Granulatteilchen in den Granulatsaustrittskanal 9 leitet, geschützt ist.

Eine weitere als Helmholtzresonator 20 ausgestaltete Resonanz-Schallabsorptionseinrichtung 20a ist derart angeordnet, dass sich die Öffnung 25 des Resonatorhalses 23 in dem Granulatsaustrittskanal 9 befindet. Es hat sich herausgestellt, dass dadurch die Geräuschemission ebenfalls besonders effektiv gedämpft werden kann, insbesondere wenn die Öffnung 25, wie dargestellt, in einem bezogen auf die Länge des aus Austrittskanals 9 ersten Drittel des Austrittskanals 9 angeordnet ist.

Dabei kann dieser Helmholtzresonator auch derart angeordnet werden, dass seine Öffnung außerhalb des Granulatflugbereichs liegt. Vorliegend wird die im Granulataustrittskanal 9 angeordnete Resonatoröffnung 25 durch das Abweiselement 8 vor umherfliegenden Granulatteilchen geschützt. In Figur 3a ist in diesem Zusammenhang der oberste theoretische Auftreffpunkt P der Granulatteilchen auf die untere Wand des Austrittskanals 9 eingezeichnet, sowie entsprechende gestrichelt gezeichnete angenommene Flugbahnen der Granulatteilchen. Dieser theoretische Auftreffpunkt P und die angenommenen Flugbahnen ergeben sich aus den Annahmen, dass die Granulatteilchen von den Messern 5 in tangentialer Richtung von der Messerwalze 4 weggeschleudert werden und dass diese von den Abweiselementen 8 und 8' reflektiert werden, wobei der Einfallswinkel gleich dem Ausfallswinkel ist, sowie der selbstverständlichen Annahme, dass sich die Flugbahnen der Granulatteilchen sich nicht durch andere Elemente, wie z.B. die Messer 5 und die Messerwalze 4 hindurch erstrecken. Es hat sich als vorteilhaft herausgestellt, wenn sich die Resonatoröffnung 25 der als Helmholtzresonator 20 ausgestalteten Resonanzschallabsorptionseinrichtung 20c entlang der unteren Wand des Austrittskanals gesehen mindestens ca. 50 mm oberhalb des theoretischen Auftrittspunktes P angeordnet ist (z.B. bei einer Länge der unteren Wand des Austrittskanals von ca. 582 mm). Bei einer Länge der in Figur 3a eingezeichneten unteren Wand des Austrittskanals von ca. 582 mm kann der Punkt P z.B. ca. 230 mm von dem (zur Granulierkammer 2 weisenden) oberen Ende dieser unteren Wand beabstandet sein.

Es hat sich herausgestellt, dass der die Resonanzschallabsorptionseinrichtung 20c bildende Helmholtzresonator 20 noch wirksamer ist, wenn eine aus dem Resonator herausweisende Flächennormale der Öffnungsfläche des Resonatorhalses im Wesentlichen parallel (oder in einem Winkel von maximal 45 Grad) zu der Stelle der Wand des Kanals 9, an der der Resonator in der Wand angeordnet ist, in Richtung Granulierkammer 2 verläuft. Beispielsweise kann dazu der Hals des Resonators, wie in Figur 3a dargestellt, um ca. 90 Grad gebogen sein. Die zuvor beschriebenen bevorzugten Ausrichtung der Öffnung des Helmholtzresonators ist bei beliebigen in dem Granulataustrittskanal 9 angeordneten Schallabsorptionsabschnitten von Resonanzschallabsorptionseinrichtungen von Vorteil.

Die als Helmholtzresonator 20 ausgestaltete Resonanz-Schallabsorptionseinrichtung 20b ist derart angeordnet, dass sich die Öffnung 25 des Resonatorhalses 23 in dem Strangeingang 3 befindet. Diese Resonanz-Schallabsorptionseinrichtung 20b bewirkt eine weitere Reduktion des von dem Granulator 1 insgesamt emittierten Lärms, die allerdings weniger stark ist, als eine der von den Resonanz-Schallabsorptionseinrichtungen 20a und 20c bewirkten Lärmreduktionen.

Luftdurchlässige Abdeckungen 26 auf den Öffnungen 25 der verwendeten Helmholtzresonatoren 20 verhindern den Eintritt von Granulat in die Helmholtzresonatoren 20 bei manueller Reinigung der Granuliervorrichtung mittels Druckluft.

Die geschlossene Granulierkammer 2 ist mit einer zweiten (nicht dargestellten) Haube zur Schallisolierung versehen. Diese ist bei Granulatoren gemäß dem Stand der Technik normalerweise mit Dämmaterial versehen. Bei der vorliegenden Erfindung kann auf Grund der Lärmreduktion durch die Resonanz-Schallabsorptionseinrichtungen unter Umständen (insbesondere bei kleinen, weniger lauten Granulatoren) auf eine derartige Haube verzichtet werden.

Der in Figur 4 dargestellte Stranggranulator 1 gemäß der zweiten Ausführungsform ist im Wesentlichen identisch zu dem der ersten Ausführungsform aufgebaut. Er besitzt jedoch neben den Resonanz-Schallabsorptionseinrichtungen 20a, 20b und 20c weitere Resonanz-Schallabsorptionseinrichtungen 20a', 20b' und 20c'.

Diese sind ebenfalls wie in Figur 3b dargestellt als Helmholtzresonator 20 mit variabler Resonanzfrequenz ausgestaltet. Weiterhin sind sie benachbart zu den auch bei der ersten Ausführungsform vorhandenen Resonanz-Schallabsorptionseinrichtungen 20a, 20b und 20c angeordnet und werden (mittels Aktuatoren 21 und an Hand der erfassten Schnittfrequenz fₛ) auf eine zu der Schnittfrequenz fₛ harmonische Frequenz fₕ abgestimmt, um auch bei dieser Frequenz Lärm zu reduzieren.

Überdies können noch weitere Resonanz-Schallabsorptionseinrichtungen in Form von Helmholtzresonatoren vorgesehen sein, die auf weitere zu den Schnittfrequenzen harmonische Frequenzen mittels entsprechenden Aktuatoren abgestimmt werden.

Grundsätzlich können die Resonanz-Schallabsorptionseinrichtungen mit ihren Schallabsorptionsabschnitten (entsprechend den Resonatoröffnungen bei Verwendung von Helmholtzresonatoren) natürlich an beliebigen Positionen innerhalb der Granulierkammer 2, des Stangengangs 3 oder des Austrittskanals 9 angeordnet sein. Besonders wirksam sind sie, wenn ihre Schallabsorptionsabschnitte - z.B. abhängig von etwaigen in der Granulierkammer 2, dem Stangengang 3 und/oder dem Austrittskanal 9 auftretenden Raummoden - in Bereichen angeordnet werden, in denen der Schall eine besonders große Intensität aufweist.

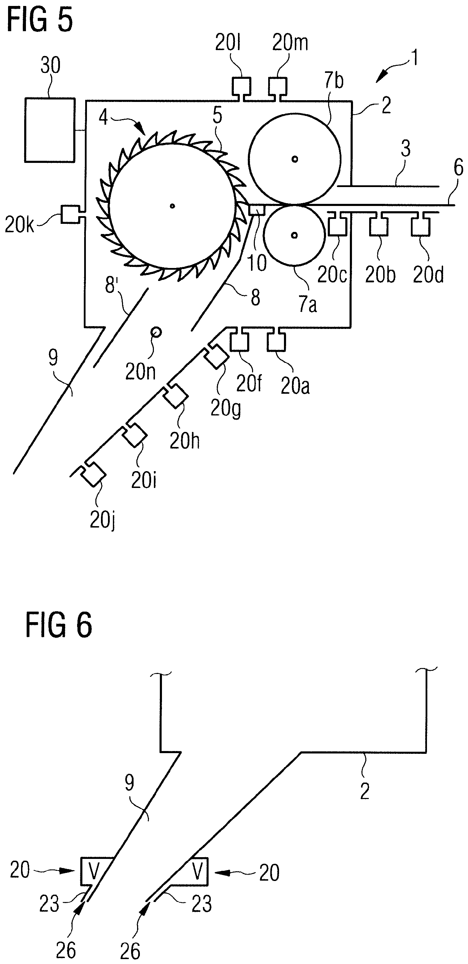

In Figur 5 sind beispielhaft weitere bevorzugte Positionen, an denen Resonanz-Schallabsorptionseinrichtungen angeordnet werden können, dargestellt. Dabei können die Schallabsorptionsabschnitte der als Helmholtzresonator ausgestalteten Resonanz-Schallabsorptionseinrichtungen 20g, 20h, 20i und 20j in einem entlang der Länge des Granulataustrittskanals gesehen ersten Viertel, zweiten Viertel, dritten Viertel und einem vierten und letzten Viertel des Granulataustrittskanals angeordnet sein. Der Schallabsorptionsabschnitt der Resonanz-Schallabsorptionseinrichtung 20f kann wie der Schallabsorptionsabschnitt der Resonanz-Schallabsorptionseinrichtung 20a in dem zuvor beschriebenen Bereich unterhalb der Granulierwalzen 7a, 7b in der Granulierkammer 2 angeordnet sein, grenzt jedoch an den Granulataustrittskanal 9 an. Die Schallabsorptionsabschnitte der Resonanz-Schallabsorptionseinrichtungen 20d, 20b und 20e können in Strangeinzugsrichtung gesehen in einem ersten, zweiten bzw. dritten Drittel des Strangeinzugkanals 3 angeordnet sein. Der Schallabsorptionsabschnitt der Resonanz-Schallabsorptionseinrichtung 20m kann sich in einem Bereich innerhalb der Granulierkammer oberhalb der Granulierwalzen 7a, 7b befinden. Der Schallabsorptionsabschnitt der Resonanz-Schallabsorptionseinrichtung 20l kann sich in der Granulierkammer im Wesentlichen oberhalb des Bereichs, in dem die Stränge 6 granuliert werden, befinden, und der Schallabsorptionsabschnitt der Resonanz-Schallabsorptionseinrichtung 20k kann sich in einem dem Strangeinzug gegenüberliegenden Bereich der Granulierkammer 2 befinden. Der Schallabsorptionsabschnitt der Resonanz-Schallabsorptionseinrichtung 20n kann sich direkt an einem oberen Ende des Granulataustrittskanals 9 befinden. Bevorzugt sind neben den zuvor beschriebenen Stranggranulatoren auch Stranggranulatoren, die zumindest die oben beschriebenen Resonanz-Schallabsorptionseinrichtungen 20h und 20b oder 20h und 20a aufweisen.

Wie in Figur 6 dargestellt, können Resonanz-Schallabsorptionseinrichtungen, insbesondere als Helmholtzresonator 20 ausgestaltete Resonanz-Schallabsorptionseinrichtungen, auch derart angeordnet werden, dass ihre Schallabsorptionsabschnitte sich im Bereich des Endes des Graunlataustrittskanals 9, insbesondere auch außerhalb des Graunlataustrittskanals 9, befinden. Wie in Figur 6, in der nur der in diesem Zusammenhang relevante Abschnitt des zuvor beschriebenen Stranggranulators dargestellt ist, gezeigt wird, kann eine entsprechende Resonanzschallabsorptionseinrichtung aus einem Helmholtzresonator 20 bestehen, dessen Hals 23 sich vorzugsweise parallel zu einem unteren Endabschnitt des Granulataustrittskanals 9 erstreckt, und vorzugsweise bündig mit dem Granulataustrittskanal 9 endet. Dabei kann auch eine Seitenwand des Resonators durch eine Seitenwand des Granulataustrittskanals 9 gebildet sein. Gemäß einer besonders bevorzugten Ausführungsform erstreckt sich der in Figur 6 im Schnitt dargestellte Helmholtzresonator 20 um den Granulataustrittskanal herum, d.h. z.B. bei einem runden Austrittskanal bildet die Öffnung (Mündung) des Halses des Resonators einen Ring, der sich um den Granulataustrittskanal herum erstreckt. Alternativ zu dieser besonders bevorzugten Anordnung können natürlich auch mehrere Helmholtzresonatoren wie zuvor beschrieben angeordnet werden, z.B. derart, dass sich ebenfalls die Schnittbetrachtung von Figur 6 ergibt, wobei dann auf beiden dargestellten Seiten des Austrittskanals verschiedene Helmholtzresonatoren 20 erkennbar sind.

Wie zuvor z.B. im Zusammenhang mit Figur 3b erwähnt, können auch mehrere Resonanzschallabsorptionseinrichtungen vorhanden sein, von denen zumindest eine auf die Schnittfrequenz abgestimmt wird und die andere oder die anderen auf dazu harmonische Frequenzen. Insbesondere bei Verwendung geeignet ausgestalteter Helmholtzresonatoren kann dabei, wie in Figur 7 dargestellt, mittels eines Aktuators, z.B. unter Verwendung eines geeigneten Gestänges 27 zur Ankopplung an die Kolben 22 in den Resonatoren 20, die Resonanzfrequenz aller Resonatoren derart verändert werden, dass die Resonanzfrequenz einer der Helmholtzresonatoren stets der Schnittfrequenz fₛ und die der anderen Helmholtzresonatoren jeweils einer dazu hamonischen Frequenzen fₕ entsprechen. In dem Beispiel von Figur 7 sind die Helmholtzresonatoren an den schematisch dargestellten Granulataustrittskanal 9 angekoppelt, was jedoch keine Vorraussetzung für die Verwendung eines gemeinsamen Aktuators ist. Natürlich können auch mehrere geeignet ausgestaltete Helmholtzresonatoren mittels eines gemeinsamen Aktuators auf dieselbe Frequenz abgestimmt werden.

In Figur 8 sind die Schritte eines erfindungsgemäßen Granulierverfahrens dargestellt, das mit den Stranggranulatoren der Figuren 3a und 4 ausgeführt werden kann. Dementsprechend wird zunächst im Verfahrensschritt S1 ein erfindungsgemäßer Stranggranulator 1 zur Verfügung gestellt, und dann werden im Schritt S2 dessen Messerwalze 4 Kunststoffstränge 6 zugeführt, die dadurch im Schritt S3 zu Granulat granuliert werden, wobei Schall mittels der Resonanz-Schallabsorptionseinrichtungen 20a, 20b, 20c; 20a', 20b', 20c' reduziert wird. Während des Granulierens (Schritt S3) werden die Resonanzfrequenzen der Resonanz-Schallabsorptionseinrichtungen 20a, 20b, 20c; 20a', 20b', 20c' in Abhängigkeit von der Schnittfrequenz fₛ des Granulators 1 automatisch eingestellt (Verfahrensschritt S3').

Die zuvor genannte Schnittfrequenz fₛ kann z.B. 440 Hz betragen. Ein mit der Vorliegenden Erfindung verwendbarer Helmholtzresonator kann eine Halsfläche A₀ von 0,005 m² aufweisen (z.B. mit kreisförmigem Querschnitt mit einem Radius von 0,04 m oder quadratischem Querschnitt mit Seitenlängen von 0,071 m), eine Resonatorhalslänge von L=0,02 m, ein Resonatorvolumen V von 0,007 m³ (z.B. ein Würfel mit Seitenlängen von 0,085 m). Der Durchmesser eines Resonatorhalses 23 mit kreisförmigem Querschnitt kann z.B. zwischen 32 mm und 125 mm betragen (z.B. 32 mm, 40 mm, 50 mm, 63 mm , 80 mm, 100 mm oder 125 mm) und der maximale Hub, um den ein Resonatorkolben 22 zur Variation des Resonatorvolumens verfahren werden kann, kann z.B. zwischen 10 mm und 2000 mm oder zwischen 20 und 500 mm liegen (z.B. 20 mm, 25 mm, 30 mm, 40 mm, 50 mm, 60 mm, 70 mm, 80 mm, 100 mm, 125 mm, 150 mm, 160 mm, 200 mm, 250 mm, 300 mm, 320 mm, 400 mm oder 500 mm).

Die Erfindung wurde beispielsweise mit einer Messerwalze 4, die 32 über ihren Umfang verteilte Zähne 5 aufweist, erfolgreich getestet. Experimentell konnte eine hörbare Reduktion der dominierenden Schnittfrequenz von ca. 12 dB erzielt werden, was zu einer Gesamtpegelreduktion von ca. 4 dB geführt hat.

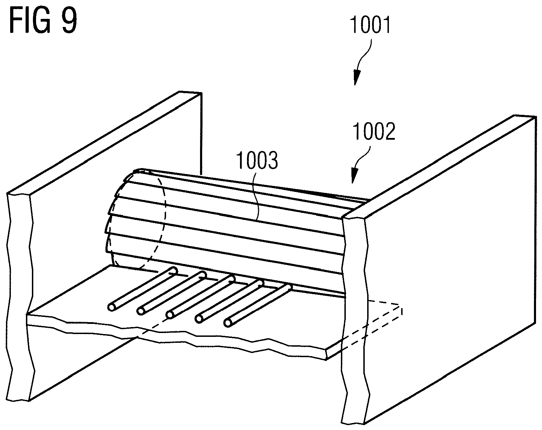

Bei dem in Figur 9 dargestellten Stranggranulator 1001 gemäß dem Stand der Technik sind die Granuliermesser 1003 der Messerwalze 1002 des Stranggranulators 1001 entlang ihrer Längsachse schräg zu einer zu der Rotationsrichtung der Messerwalze senkrechten Richtung ausgerichtet, um Schallemissionen zu reduzieren. Bevorzugt werden auch bei erfindungsgemäßen Stranggranulatoren die Granuliermesser derart angeordnet, um die Schallemissionen noch weiter zu reduzieren.

## Patentansprüche

1. Stranggranulator (1) zum Granulieren eines oder mehrerer Kunststoffstränge (6), umfassend
eine Messerwalze (4), welche derart angeordnet ist, dass ihr Kunststoffstränge (6) in Endlosform zuführbar sind, und ein mit der Messerwalze (4) zusammenwirkendes Ambossmesser (10) zum Granulieren der Stränge (6) zu Granulat,
**gekennzeichnet durch**
zumindest eine Resonanz-Schallabsorbtionseinrichtung (20a, 20b, 20c; 20a', 20b', 20c'), in Form eines akustischen Feder-Masse-Systems, das angeordnet und eingerichtet ist, im Betrieb des Stranggranulators (1) durch eine Schallemission des Stranggranulators (1) zu einer freien gedämpften Schwingung angeregt zu werden und die Schallemission dadurch zu reduzieren, wobei die Resonanzfrequenz der Resonanz-Schallabsorbtionseinrichtung (20a, 20b, 20c; 20a', 20b', 20c') veränderbar ist.

2. Stranggranulator (1) nach Anspruch 1, **dadurch gekennzeichnet, dass** die Resonanzfrequenz der Resonanz-Schallabsorbtionseinrichtung (20a, 20b, 20c; 20a', 20b', 20c') auf mehrere Schnittfrequenzen (fₛ), mit denen der Granulator (1) betrieben werden kann, abstimmbar ist.

3. Stranggranulator (1) nach Anspruch 2, **gekennzeichnet durch** eine Stelleinrichtung, die eingerichtet ist, die Resonanzfrequenz der Resonanz-Schallabsorbtionseinrichtung (20a, 20b, 20c; 20a', 20b', 20c') in Abhängigkeit von der Schnittfrequenz (fₛ) des Granulators (1) automatisch einzustellen.

4. Stranggranulator (1) nach Anspruch 3, **dadurch gekennzeichnet, dass** die Stelleinrichtung eine Erfassungseinrichtung (30) zum Erfassen der Schnittfrequenz (fₛ) oder einer dazu proportionalen Größe sowie einen anhand der erfassten Schnittfrequenz (fₛ) oder der dazu proportionalen Größe gesteuerten Aktuator (21) zum Einstellen der Resonanzfrequenz der Resonanz-Schallabsorbtionseinrichtung (20a, 20b, 20c; 20a', 20b', 20c') umfasst.

5. Stranggranulator (1) nach einem der vorhergehenden Ansprüche, **dadurch gekennzeichnet, dass** es sich bei der Resonanz-Schallabsorbtionseinrichtung (20a, 20b, 20c; 20a', 20b', 20c') um einen Helmholtzresonator (20) handelt.

6. Stranggranulator (1) nach Anspruch 5, **dadurch gekennzeichnet, dass** eine Öffnung (26) des Helmholtzresonators (20) mit einer Abdeckung (24) versehen ist.

7. Stranggranulator (1) nach Anspruch 5 oder 6 **dadurch gekennzeichnet, dass** der Helmholtzresonator (20) derart angeordnet ist, dass eine Öffnung (26) des Helmholtzresonators (20) außerhalb eines Granulatflugbereichs angeordnet ist.

8. Stranggranulator (1) nach einem der vorhergehenden Ansprüche, **gekennzeichnet durch** eine die Messerwalze und das Ambossmesser umschließende Granulierkammer (2), wobei ein Schallabsorbtionsabschnitt der Resonanz-Schallabsorbtionseinrichtung (20a; 20a, 20a') in der Granulierkammer angeordnet ist.

9. Stranggranulator (1) nach einem der Ansprüche 1 bis 7, **dadurch gekennzeichnet, dass** ein Schallabsorbtionsabschnitt der Resonanz-Schallabsorbtionseinrichtung (20c; 20c, 20c') in einem Granulataustrittskanal (9) angeordnet ist.

10. Stranggranulator (1) nach Anspruch 8, **dadurch gekennzeichnet, dass** der Stranggranulator (1) mehrere Resonanz-Schallabsorbtionseinrichtungen (20a, 20b, 20c; 20a', 20b', 20c') aufweist, welche jeweils eine Masse umfassen, die angeordnet und eingerichtet ist, im Betrieb des Stranggranulators (1) durch die Schallemission des Stranggranulators (1) zu einer freien gedämpften Schwingung angeregt zu werden und die Schallemission dadurch zu reduzieren, wobei zumindest eine der Resonanz-Schallabsorbtionseinrichtungen (20a; 20a') einen in der Granulierkammer angeordneten Schallabsorbtionsabschnitt besitzt und zumindest eine weitere dieser Resonanz-Schallabsorbtionseinrichtungen (20c; 20c') einen in einem Granulatsaustrittskanal angeordneten Schallabsorbtionsabschnitt besitzt.

11. Stranggranulator (1) nach Anspruch 10, **dadurch gekennzeichnet, dass** zumindest noch eine weitere der Resonanz-Schallabsorbtionseinrichtungen (20b; 20b') einen in einem zur Granulierkammer führenden Strangeingang (3) angeordneten Schallabsorbtionsabschnitt besitzt.

12. Stranggranulator (1) nach Anspruch 8, 10 oder 11, **gekennzeichnet durch** eine Einzugswalze (7a, 7b), die eingerichtet ist, der Messerwalze (4) Kunststoffstränge (6) zuzuführen, wobei es sich bei der Resonanz-Schallabsorptionseinrichtung (20a; 20a, 20a'), deren Schallabsorbtionsabschnitt in der Granulierkammer (2) angeordnet ist, um einen Helmholtzresonator handelt, dessen Öffnung (26) unterhalb der Einzugswalze (7a, 7b) angeordnet ist.

13. Stranggranulator (1) nach Anspruch 9 oder 10, **dadurch gekennzeichnet, dass** es sich bei der Resonanz-Schallabsorptionseinrichtung (20c; 20c'), deren Schallabsorbtionsabschnitt in dem Granulataustrittskanal (9) angeordnet ist, um einen Helmholtzresonator handelt, dessen Öffnung (26) in einem bezogen auf eine Länge des Granulataustrittskanals ersten Drittel des Granulataustrittskanals (9) angeordnet ist.

14. Stranggranulator (1) nach einem der vorhergehenden Ansprüche, **dadurch gekennzeichnet, dass** der Stranggranulator (1) mehrere Resonanz-Schallabsorbtionseinrichtungen (20a, 20b, 20c; 20a', 20b', 20c') aufweist, welche jeweils eine Masse umfassen, die angeordnet und eingerichtet ist, im Betrieb des Stranggranulators (1) durch die Schallemission des Stranggranulators (1) zu einer freien gedämpften Schwingung angeregt zu werden und die Schallemission dadurch zu reduzieren, wobei die Resonanzfrequenz zumindest einer dieser Resonanz-Schallabsorbtionseinrichtungen (20a, 20b, 20c) auf mehrere Schnittfrequenzen (fₛ), mit denen der Granulator betrieben werden kann, abstimmbar ist, und die Resonanzfrequenz zumindest einer weiteren dieser Resonanz-Schallabsorbtionseinrichtungen (20a', 20b', 20c') auf zu diesen Schnittfrequenzen (fₛ) harmonische Frequenzen (fₕ) abstimmbar ist.

15. Verfahren zum Granulieren von Kunststoffsträngen (6), **gekennzeichnet durch** die Schritte:
- zur Verfügung stellen (S1) eines Stranggranulators (1), umfassend zumindest eine Resonanz-Schallabsorbtionseinrichtung (20a, 20b, 20c; 20a', 20b', 20c'), welche eine Masse umfasst, die angeordnet und eingerichtet ist, im Betrieb des Stranggranulators (1) durch eine Schallemission des Stranggranulators (1) zu einer freien gedämpften Schwingung angeregt zu werden und die Schallemission dadurch zu reduzieren,
- Zuführen (S2) von einem oder mehreren Kunststoffsträngen (6) in Endlosform zu einer Messerwalze (4) des Stranggranulators (1), die zum Granulieren der Stränge (6) mit einem Ambossmesser (10) des Stranggranulators (1)zusammenwirkt,
- Granulieren (S3) der Stränge (6) zu Granulat, wobei eine Schallemission mittels der Resonanz-Schallabsorbtionseinrichtung (20a, 20b, 20c; 20a', 20b', 20c') reduziert wird,
- Einstellen der Resonanzfrequenz der Resonanz-Schallabsorbtionseinrichtung (20a, 20b, 20c; 20a', 20b', 20c') in Abhängigkeit von einer Schnittfrequenz (fₛ) des Granulators (1).

16. Verfahren nach Anspruch 15, **dadurch gekennzeichnet, dass** die Resonanzfrequenz der Resonanz-Schallabsorbtionseinrichtung (20a, 20b, 20c; 20a', 20b', 20c') in Abhängigkeit von der Schnittfrequenz (fₛ) des Granulators (1) automatisch eingestellt wird.

## Claims

1. A strand pelletizer (1) for pelletizing one or a plurality of plastic strands (6), comprising
a cutting rotor (4) which is arranged such that it can be fed with plastic strands (6) in endless form, and a bed knife (10) cooperating with the cutting rotor (4) for pelletizing the strands (6) to form a granulate,
**characterized by**
at least one resonance-sound absorption device (20a, 20b, 20c; 20a', 20b', 20c') in the form of an acoustic spring-mass system which is arranged and adapted, during the operation of the strand pelletizer (1), to be excited to a free, damped oscillation by a sound emission of the strand pelletizer (1) and to reduce the sound emission thereby, wherein the resonance frequency of the resonance-sound absorption device (20a, 20b, 20c; 20a', 20b', 20c') is variable.

2. The strand pelletizer (1) according to claim 1, **characterized in that** the resonance frequency of the resonance-sound absorption device (20a, 20b, 20c; 20a', 20b', 20c') is tunable to a plurality of cutting frequencies (fₛ) at which the pelletizer (1) can be operated.

3. The strand pelletizer (1) according to claim 2, **characterized by** an adjusting device which is adapted to automatically adjust the resonance frequency of the resonance-sound absorption device (20a, 20b, 20c; 20a', 20b', 20c') in dependence on the cutting frequency (fₛ) of the pelletizer (1).

4. The strand pelletizer (1) according to claim 3, **characterized in that** the adjusting device includes a detection device (30) for detecting the cutting frequency (fₛ) or a quantity proportional thereto and an actuator (21) controlled on the basis of the detected cutting frequency (fₛ) or the quantity proportional thereto for adjusting the resonance frequency of the resonance-sound absorption device (20a, 20b, 20c; 20a', 20b', 20c').

5. The strand pelletizer (1) according to any of the preceding claims, **characterized in that** the resonance-sound absorption device (20a, 20b, 20c; 20a', 20b', 20c') is a Helmholtz resonator (20).

6. The strand pelletizer (1) according to claim 5, **characterized in that** an opening (26) of the Helmholtz resonator (20) is supplied with a cover (24).

7. The strand pelletizer (1) according to claim 5 or 6, **characterized in that** the Helmholtz resonator (20) is arranged such that an opening (26) of the Helmholtz resonator (20) is outside a granulate flight envelope.

8. The strand pelletizer (1) according to any of the preceding claims, **characterized by** a pelletizing chamber (2) enclosing the cutting rotor and the bed knife, wherein a sound absorption section of the resonance-sound absorption device (20a; 20a, 20a') is arranged in the pelletizing chamber.

9. The strand pelletizer (1) according to any of the claims 1 to 7, **characterized in that** a sound absorption section of the resonance-sound absorption device (20c; 20c, 20c') is arranged in a granulate outlet channel (9).

10. The strand pelletizer (1) according to claim 8, **characterized in that** the strand pelletizer (1) has a plurality of resonance-sound absorption devices (20a, 20b, 20c; 20a', 20b', 20c') which respectively comprise a mass which is arranged and adapted, during operation of the strand pelletizer (1), to be excited to a free, damped oscillation and to reduce the sound emission thereby, wherein at least one of the resonance-sound absorption devices (20a; 20a') has a sound absorption section arranged in the pelletizing chamber and at least one further one of said resonance-sound absorption devices (20c; 20c') has a sound absorption section arranged in a granulate outlet channel.

11. The strand pelletizer (1) according to claim 10, **characterized in that** at least another further one of the resonance-sound absorption devices (20b; 20b') has a sound absorption section arranged in a strand inlet (3) leading to the pelletizing chamber.

12. The strand pelletizer (1) according to claim 8, 10 or 11, **characterized by** a feed roller (7a, 7b) which is adapted to feed plastic strands (6) to the cutting rotor (4), wherein the resonance-sound absorption device (20a; 20a, 20a') the sound absorption section of which is arranged in the pelletizing chamber (2) is a Helmholtz resonator the opening (26) of which is arranged below the feed roller (7a, 7b).

13. The strand pelletizer (1) according to claim 9 or 10, **characterized in that** the resonance-sound absorption device (20c; 20c ') the sound absorption section of which is arranged in the granulate outlet channel (9) is a Helmholtz resonator the opening (26) of which is arranged in a first third of the granulate outlet channel (9) with reference to a length of the granulate outlet channel.

14. The strand pelletizer (1) according to any of the preceding claims, **characterized in that** the strand pelletizer (1) has a plurality of resonance-sound absorption devices (20a, 20b, 20c; 20a', 20b', 20c') which respectively comprise a mass which is arranged and adapted, during the operation of the strand pelletizer (1), to be excited to a free, damped oscillation by the sound emission of the strand pelletizer (1) and to reduce the sound emission thereby, wherein the resonance frequency of at least one of said resonance-sound absorption devices (20a, 20b, 20c) is tunable to a plurality of cutting frequencies (fₛ) at which the pelletizer can be operated, and the resonance frequency of at least one other of said resonance-sound absorption devices (20a', 20b', 20c') is tunable to frequencies (fₕ) that harmonize with these cutting frequencies (fₛ).

15. A method for pelletizing plastic strands (6), **characterized by** the steps of:
- making available (S1) a strand pelletizer (1), comprising at least one resonance-sound absorption device (20a, 20b, 20c; 20a', 20b', 20c') which includes a mass that is arranged and adapted, during the operation of strand pelletizer (1), to be excited to a free, damped oscillation by a sound emission of the strand pelletizer (1) and to reduce the sound emission thereby,
- feeding (S2) one or a plurality of plastic strands (6) in endless form to a cutting rotor (4) of the strand pelletizer (1) which cooperates with a bed knife (10) of the strand pelletizer (1) for pelletizing the strands (6),
- pelletizing (S3) the strands (6) to form a granulate, wherein a sound emission is reduced by means of the resonance-sound absorption device (20a, 20b, 20c; 20a', 20b', 20c'),
- adjusting the resonance frequency of the resonance-sound absorption device (20a, 20b, 20c; 20a', 20b', 20c') in dependence on a cutting frequency (fₛ) of the pelletizer (1).

16. The method according to claim 15, **characterized in that** the resonance frequency of the resonance-sound absorption device (20a, 20b, 20c; 20a', 20b', 20c') is automatically adjusted in dependence on the cutting frequency (fₛ) of the pelletizer (1).

## Revendications

1. Granulateur à joncs (1) destiné à la granulation d'un ou de plusieurs joncs de matière plastique (6), comprenant
un rouleau à couteaux (4) agencé de telle façon qu'il peut être alimenté en joncs de matière plastique (6) sous forme continue, et un couteau enclume (10) co-agissant avec le rouleau à couteaux (4) pour la granulation des joncs (6) de manière à obtenir du granulat,
**caractérisé par**
au moins un dispositif de résonance-absorption acoustique (20a, 20b, 20c; 20a', 20b', 20c') sous forme d'un système acoustique ressort-masse agencé et équipé pour, lors du fonctionnement du granulateur à joncs (1), être, par une émission acoustique du granulateur à joncs (1), excité en une oscillation amortie libre et réduire ainsi l'émission acoustique, cependant que la fréquence de résonance du dispositif de résonance-absorption acoustique (20a, 20b, 20c; 20a', 20b', 20c') est modifiable.

2. Granulateur à joncs (1) selon la revendication 1, **caractérisé en ce que** la fréquence de résonance du dispositif de résonance-absorption acoustique (20a, 20b, 20c; 20a', 20b', 20c') est accordable sur plusieurs fréquences de coupe (fₛ) auxquelles le granulateur (1) peut être exploité.

3. Granulateur à joncs (1) selon la revendication 2, **caractérisé par** un dispositif de réglage équipé pour régler automatiquement la fréquence de résonance du dispositif de résonance-absorption acoustique (20a, 20b, 20c; 20a', 20b', 20c') en fonction de la fréquence de coupe (fₛ) du granulateur (1).

4. Granulateur à joncs (1) selon la revendication 3, **caractérisé en ce que** le dispositif de réglage comprend un dispositif de saisie (30) pour la saisie de la fréquence de coupe (fₛ) ou d'une grandeur y étant proportionnelle, ainsi qu'un actionneur (21), commandé au moyen de la fréquence de coupe (fₛ) saisie ou de la grandeur y étant proportionnelle, pour le réglage de la fréquence de résonance du dispositif de résonance-absorption acoustique (20a, 20b, 20c; 20a', 20b', 20c').

5. Granulateur à joncs (1) selon une des revendications précédentes, **caractérisé en ce que** le dispositif de résonance-absorption acoustique (20a, 20b, 20c; 20a', 20b', 20c') consiste en un résonateur de Helmholtz (20).

6. Granulateur à joncs (1) selon la revendication 5, **caractérisé en ce qu'**une ouverture (26) du résonateur de Helmholtz (20) est pourvue d'un recouvrement (24).

7. Granulateur à joncs (1) selon la revendication 5 ou 6, **caractérisé en ce que** le résonateur de Helmholtz (20) est agencé de telle façon qu'une ouverture (26) du résonateur de Helmholtz (20) est agencée à l'extérieur d'une zone de jet de granulat.

8. Granulateur à joncs (1) selon une des revendications précédentes, **caractérisé par** une chambre de granulation (2) entourant le rouleau à couteaux et le couteau enclume, une section d'absorption acoustique du dispositif de résonance-absorption acoustique (20a; 20a, 20a') étant agencé dans la chambre de granulation.

9. Granulateur à joncs (1) selon une des revendications de 1 à 7, **caractérisé en ce qu'**une section d'absorption acoustique du dispositif de résonance-absorption acoustique (20c; 20c, 20c') est agencé dans un canal de sortie de granulat (9).

10. Granulateur à joncs (1) selon la revendication 8, **caractérisé en ce que** le granulateur à joncs (1) comporte plusieurs dispositifs de résonance-absorption acoustique (20a, 20b, 20c; 20a', 20b', 20c') qui comprennent respectivement une masse agencée et équipée pour, lors du fonctionnement du granulateur à joncs (1), être, par l'émission acoustique du granulateur à joncs (1), excitée en une oscillation amortie libre et pour réduire ainsi l'émission acoustique, cependant qu'au moins un des dispositifs de résonance-absorption acoustique (20a; 20a') comporte une section d'absorption acoustique agencée dans la chambre de granulation et qu'au moins un autre de ces dispositifs de résonance-absorption acoustique (20c; 20c') comporte une section d'absorption acoustique agencée dans un canal de sortie de granulat.

11. Granulateur à joncs (1) selon la revendication 10, **caractérisé en ce qu'**au moins encore un autres des dispositifs de résonance-absorption acoustique (20b; 20b') comporte une section d'absorption acoustique agencée dans une entrée pour joncs (3) menant à la chambre de granulation.

12. Granulateur à joncs (1) selon la revendication 8, 10 ou 11, **caractérisé par** un rouleau d'introduction (7a, 7b) équipé pour alimenter le rouleau à couteaux (4) en joncs de matière plastique (6), le dispositif de résonance-absorption acoustique (20a; 20a, 20a') dont la section d'absorption acoustique est agencée dans la chambre de granulation consistant en un résonateur de Helmholtz dont l'ouverture (26) est agencée en-dessous du rouleau d'introduction (7a, 7b).

13. Granulateur à joncs (1) selon la revendication 9 ou 10, **caractérisé en ce que** le dispositif de résonance-absorption acoustique (20c; 20c') dont la section d'absorption acoustique est agencée dans le canal de sortie de granulat (9) consiste en un résonateur de Helmholtz dont l'ouverture (26) est, relativement à une longueur du canal de sortie de granulat, agencée dans un premier tiers du canal de sortie de granulat (9).

14. Granulateur à joncs (1) selon une des revendications précédentes, **caractérisé en ce que** le granulateur à joncs (1) comporte plusieurs dispositifs de résonance-absorption acoustique (20a, 20b, 20c; 20a', 20b', 20c') qui comprennent respectivement une masse agencée et équipée pour, lors du fonctionnement du granulateur à joncs (1), être, par l'émission acoustique du granulateur à joncs (1), excitée en une oscillation amortie libre et pour réduire ainsi l'émission acoustique, cependant que la fréquence de résonance d'au moins un de ces dispositifs de résonance-absorption acoustique (20a, 20b, 20c) est accordable sur plusieurs fréquences de coupe (fₛ) auxquelles le granulateur peut être exploité, et que la fréquence de résonance d'au moins un autre de ces dispositifs de résonance-absorption acoustique (20a', 20b', 20c') est accordable sur des fréquences (fₕ) en harmonie avec ces fréquences de coupe (fₛ).

15. Procédé de granulation de joncs de matière plastique (6), **caractérisé par** les étapes :
- mise à disposition (S1) d'un granulateur à joncs (1) comprenant au moins un dispositif de résonance-absorption acoustique (20a, 20b, 20c; 20a', 20b', 20c') qui comprend une masse agencée et équipée pour, lors du fonctionnement du granulateur à joncs (1), être, par une émission acoustique du granulateur à joncs (1), excitée en une oscillation amortie libre et pour réduire ainsi l'émission acoustique,
- amenée (S2) d'un ou de plusieurs joncs de matière plastique (6) sous forme continue à un rouleau à couteaux (4) du granulateur à joncs (1) qui, pour granuler les joncs (6), co-agit avec un couteau enclume (10) du granulateur à joncs (1),
- granulation (53) des joncs (6) de manière à obtenir du granulat, une émission acoustique étant réduite au moyen du dispositif de résonance-absorption acoustique (20a, 20b, 20c; 20a', 20b', 20c'),
- réglage de la fréquence de résonance du dispositif de résonance-absorption acoustique (20a, 20b, 20c; 20a', 20b', 20c') en fonction d'une fréquence de coupe (fₛ) du granulateur (1).

16. Procédé selon la revendication 15, **caractérisé en ce que** la fréquence de résonance du dispositif de résonance-absorption acoustique (20a, 20b, 20c; 20a', 20b', 20c') est réglée automatiquement en fonction de la fréquence de coupe (fₛ) du granulateur (1).
